# EUROPEAN PATENT APPLICATION

(11) **EP 0 686 496 A1**
(43) Date of publication of application: **13.12.1995**
(21) Application number: 94106996.5
(22) Date of filing: 04.05.1994
(51) Int. Cl.: B32B 17/10, C03C 17/38, C03C 27/12

(54) **Laminated ornamental glass**

(71) Applicant: Lin, Chii-Hsiung, Taiwan (TW)
(72) Inventor: Lin, Chii-Hsiung, Taiwan (TW)
(74) Representative: WILHELMS, KILIAN & PARTNER Patentanwälte

(57) **Abstract**

A laminated ornamental glass, capable of light transmission, comprises:
a) a first sheet of transparent or translucent glass (1);
b) a first coating layer (2) having opaque regions arranged in an array or net which has been printed or otherwise applied to one side of said glass (1) with said first coating layer (2) leaving transparent coating-free crevice portions (6) between said opaque regions; and
c) a second, white coating layer (4) and a third, black or grey oil ink coating layer (5) with the same pattern as that of said first coating layer (2) which have been printed or otherwise applied over said first coating layer;
Wherein said glass (1) on which the coating layers (2), (4), and (5) are printed or otherwise is subject to a heat treatment of a temperature ranging from 600°C to 650°C when said coating layers dried.

## Description

### BACKGROUND OF THE INVENTION

This invention relates to laminated ornamental glass which can be used for many constructional purposes, not only indoors as interior partitions, walls, interior decoration or furniture but also outdoors as a decorative material, in a light-passable curtain wall or as the glass for doors and windows.

As living standards improve, people are paying more attention to the construction of outer walls of buildings, windows and doors as well as interior decoration, furniture and partitions, with corresponding regard to luminosity, safety and privacy.

Conventionally, the ornamental glass for an interior partition, such as a screen or an inlaid plate of wall, is prepared by (1) printing a desired colored pattern directly onto a single sheet of glass, (2) reprinting on or adhering by an adhesive directly to a glass substrate a desired colored pattern which is printed in advance on a resin film or paper, or (3) printing a desired pattern of ceramic color frit onto a single sheet of glass followed by heat treatment and then coating a varnish on or adhering a resin film to said printed glass as a protective layer. As to the first two methods of producing conventional ornamental glass, the desired colored pattern printed by such methods on one of the surfaces of a single sheet of glass is exposed to the air, and is therefore subject to sunlight or oxidation so that the color of said pattern will change and fade, as well as being subject to damage when cleaning. In addition, among these aforementioned methods, some require a good printing technique for printing the desired colored pattern printed in advance on a resin film or paper on a sheet of glass, and glass-laminating skills for obtaining the desired delicate pattern as well as a bubble-free ornamental glass, so the cost of production is high. Moreover, the material of the colored pattern printed on conventional ornamental glass is an opaque glaze pigment, paint, oil ink or a mixture thereof which after a period of time will fade away while being exposed to sunshine (infrared ray or ultraviolet rays), so such ornamental glass can only be used indoors. Therefore, a laminated ornamental glass article which can be used indoors as well as outdoors and produced economically is desirable.

### SUMMARY OF THE INVENTION

It is one object of the present invention that a laminated ornamental glass is provided which can be used indoors as well as outdoors, i.e. use is not restricted to interior partitions, screen walls or ornamental inlaid plates but includes outer walls of a building, curtain walls of constructions, and the glass of doors and windows which are of good heat-insulating cabability, transparency, and luminosity.

Another object of the present invention is to provide a laminated ornamental glass which can be produced by directly printing on one of the surfaces of a sheet of glass substrate a coating layer having opaque colored regions arranged in an array or net composed of figures selected from the group consisting of circles, tetragons, and hexagons, a white paint coating layer and a black or grey oil ink coating layer then in turn being printed with the same pattern (or figures) over the colored coating layer.

A further object of the present invention is to provide a laminated ornamental glass which can be optionally adjusted to the desired degree of interior luminosity and transparency thereof by changing the ratio of the sizes of the coating layers to the crevice portions between the coating layers.

Still another object of the present invention is to provide a laminated ornamental glass where only the printing or coating pattern of the coating layers rather than indoor objects can be seen when viewed from the outside of the building or room, whereas outdoor objects can be seen through the coating-free crevice portions, when viewed from the inside of the building or room, such that desired indoor privacy is achieved by which.

Still a further object of the present invention is to provide a laminated ornamental glass composed of a sheet of transparent or light-colored, flat or bent, reinforced glass or ion exchange reinforced glass and three coating layers, printed or coated on one of the surfaces of said glass, whose materials are selected from the group consisting of heat resistant ceramic color frit and enamel and said glass with coating layers printed or coated thereon may further be laminated with a polyester film or a polycarbonate resin film.

An even further object of the present invention is to provide a laminated ornamental glass which may be coated with a metallic oxide film other than the aforementioned coating layer having colored patterns to render a mirror-reflecting effect making it a heat ray reflecting glass with high heat-insulation and high monodirectional-reflection of luminosity.

Still a further object of the present invention is to provide a laminated ornamented glass on which no reflected image of interior objects, duplicated virtual image, or distorted static image will occur when viewed from the inside of a building or room.

The term "array" is to be understood as including, for example, stripes which may be parallel, and the term "glass" is to be understood as including plastics materials.

### DETAILED DESCRIPTION OF THE INVENTION

According to the present invention, a laminated ornamental glass comprises:
a) a sheet of transparent or light-colored glass;
b) a first coating layer having opaque regions arranged in an array or net which has been printed or coated on one side of said glass by a conventional screen printing method or otherwise, with said first coating layer leaving transparent coating-free crevice portions between said opaque regions; and
c) a second, white coating layer and a third, black or grey oil ink coating layer with the same pattern as that of said first layer which have been printed or otherwise applied over said first coating layer;
   wherein said glass with said three coating layers printed or otherwise thereon is subject to a heat treatment under the temperature ranging from 600°C to 650°C after said three coating layers have dried.

In the case that the laminated ornamental glass of the present invention is to be in a bent shape, it can be obtained by heating the flat glass with aforesaid coating layers printed or otherwise thereon mounted in a mold having the desired bent shape after said coating layers have dried and before said glass is subject to aforementioned heat treatment.

Preferably, the laminated ornamental glass can be obtained by first directly printing or coating a glazed painting or a netted- or striped-figure selected from the group consisting of circles, tetragons, and hexagons, by conventional screen printing on one side of a sheet of glass substrate, a second white paint coating layer and a third black or grey oil ink coating layer then in turn being printed or coated with the same pattern (circles, tetragons or hexagons) as that of the first coating layer over the glazed painting or netted- or striped-figure coating layer, and being subjected to a heat treatment under the temperature ranging from 600°C to 650°C when said coating layers have dried.

Since the figures of each coating layer contain a coating-free crevice portion, only the printing or coating pattern of the coating layers rather than indoor objects can be seen when viewed from the outside of the building or room, whereas the black or grey coating pattern composed of, for example, circles, tetragons, or hexagons can be seen as well as outdoor objects can be seen through the coating-free crevice portions when viewed from the inside of the building or room. Therefore, the interior luminosity of the present invention is adjustable by simply changing the ratio of the sizes of the opaque coating patterns to the coating-free transparent crevice portions, for example, the rate of transparency can be adjusted from 3% to 65% depending upon the need.

The glazed painting, white paint and oil ink employed for the opaque coating layers are primarily prepared by mixing conventional heat-resistant ceramic color frit such as CaO, MnO, CdS, Cr₂O₃ or Fe₂O₃ 15 to 70 wt% with glass powder 30 to 85 wt% (the weight percentage is based on the total weight of the mixture obtained therefrom); most preferably the content of the ceramic color frit is no more than 30 wt% and that of the glass powder is no less than 30wt% so that the adhesive force can be prevented from deterioration and sufficient coloration ability of the opaque material can be rendered. As to the oil ink, the material of which is selected from polyvinyl butyryl resin, urethane, methyl acrylate resin and epoxy resin or a mixture thereof. And the thickness of each coating layer may range from 0.04 mm to 0.18 mm.

As said coating layers will not fade under sunshine due to the use of heat-resistant ceramic color frit as material, the laminated ornamental glass thus obtained may therefore be used not only as a glass with elegant and delicate colored patterns for outwardly-windows or curtain walls of buildings but also as an ornamental inlaid material for outer walls of constructions. In addition, no virtual images of indoor objects, duplicated images, or distorted static images can be seen on the surface of the laminated ornamental glass in which the coating layers are of opaque materials. In the meantime, the laminated ornamental glass of this invention may be laminated with a polyester or polycarbonate resin plate to cover the coating layers, thereby rendering an impact-resistant effect depending upon applications.

Laminated ornamental glass according to the present invention, and the prior art, will now be described in greater detail with reference to the accompanying drawings, in which:
Fig. 1 is an enlarged cross-sectional view of the structure of a conventional laminated ornamental glass;
Fig. 2 is an enlarged cross-sectional view of the structure of an embodiment of the present invention;
Fig. 3 is an enlarged cross-sectional view of the structure of another embodiment of the present invention;
Fig. 4(a) is a view of a pattern composed of circles employed in this invention when viewed from inside;
Fig. 4(b) is a view of a pattern composed of hexagons employed in this invention when viewed from inside;
Fig. 4(c) is a view of a pattern composed of tetragons employed in this invention when viewed from inside;
Fig. 5(a) is a glazed painting view of the laminated ornamental glass of this invention with a pattern composed of circles employed as a part of an interior window when viewed from outside;
Fig. 5(b) is the opposite side view of Fig. 5(a);
Fig. 6(a) is the same glazed painting view as in Fig. 5(a) except that a hexagonal pattern is used instead of circles; and
Fig. 6(b) is the opposite side view of Fig. 6(a).

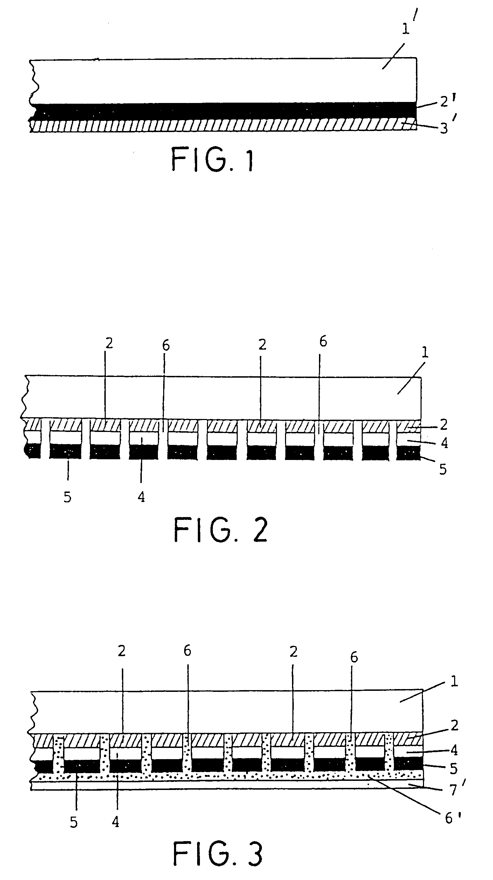

Conventional laminated ornamental glass, as shown in Fig. 1, is composed of a sheet of transparent or light-colored glass substrate 1', an opaque glazed or enamel coating layer 2' with desired color, painting, or figures printed or coated on one side of said glass substrate 1', and a black enamel or glazed coating layer or a resin protective layer 3' printed or coated over the coating layer 2'. In other words, the glazed or enamel coating layer 2' with color or figures is printed or coated on one entire surface of the glass substrate 1', whereby the conventional laminated ornamental glass is essentially a non-transparent glass substrate with opaque coating layers printed thereon. As the conventional laminated ornamental glass thus obtained cannot be seen through, it can only be used for interior partitions or as an inlaid material for inner walls of buildings, rather than being used as an inlaid material for outer walls or the glass for outwardly-facing windows or curtain walls of building.

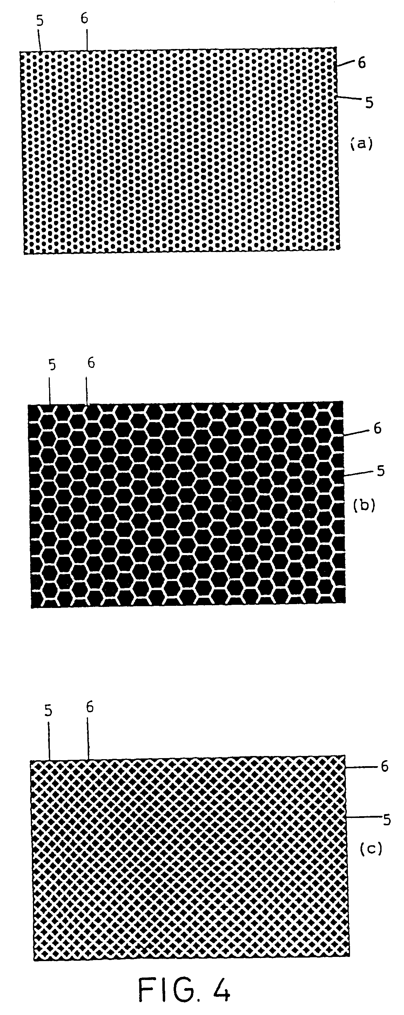

In Fig. 2 to Fig. 4, 1 is a transparent or translucent glass substrate which is selected from sodium calcium silicates reinforced glass with or without heat treatment or sodium, potassium ion exchange reinforced glass; 2, 4 and 5 are each a coating layer having an array of intercrossing stripes or a net configuration composed of circles, hexagons or tetragons, which are directly in turn printed by screen printing or coated on one side of said transparent glass substrate 1 wherein 2 is a glazed painting or other pattern coating layer, 4 is a white paint coating layer and 5 is a black or grey oil ink coating layer which together leave crevice portions 6 without any coating between the opaque patterned coating layers 2, 4 and 5; each coating layer is of thickness ranging from 0.04 mm to 0.18mm.

Referring to Fig. 3, the structure of the embodiment is the same as that shown in Fig. 2 except the crevice portions 6 is filled with a transparent adhesive 6' in the process of bonding a transparent protective base plate 7' of polyester or polycarbonate resin.

A metallic oxide coating layer with a mirror-reflecting effect instead of aforesaid glazed painting or other pattern coating layer may be printed or coated by a reflecting film treatment such as the application of the conventional vacuum deposition method or thermal decomposition oxidation film method on the glass substrate in a thickness ranging from 400A to 1800A to render the glass substrate a heat ray reflecting glass. Said metallic oxide is an oxidation paste selected from gold, silver, platinum, copper, tin, zinc, chromium, titanium, aluminum or nickel, or an alloy thereof.

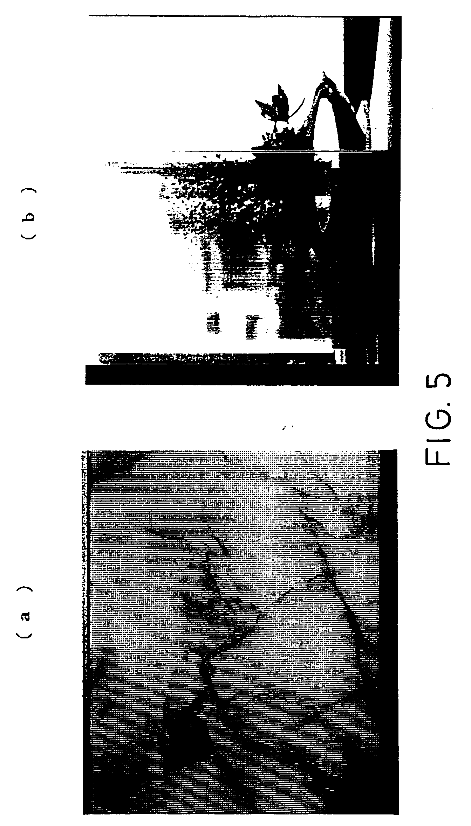

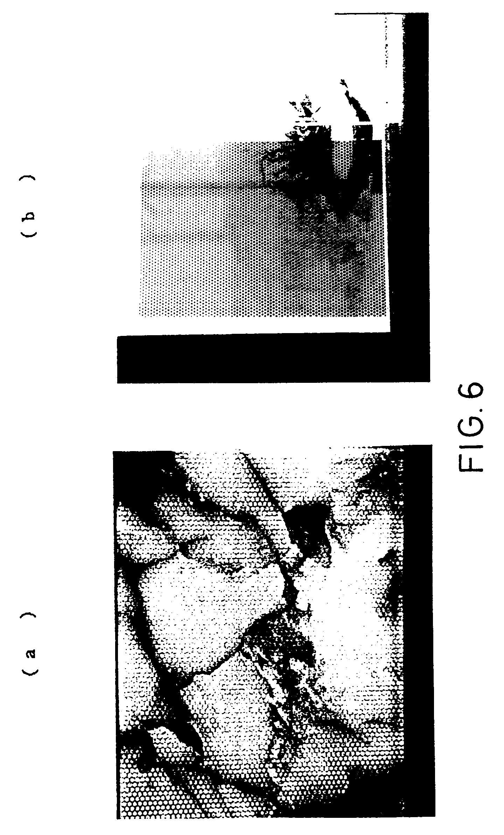

The special features of the present invention are especially understood in terms of Fig. 5 and Fig. 6.

Fig. 5(a) and Fig. 6(a) both show that no indoor objects but instead a glazed marble-pattern painting is seen when viewed from the outside, with the aforementioned coating-free crevice portions 6 being seen only obscurely. On the other hand, Fig. 5(b) and Fig. 6(b) show that it is possible to see outdoor objects through said coating-free crevice portions 6 of the laminated ornamental glass of the invention when viewed from the inside.

## Claims

1. A laminated ornamental glass comprising:
a) a first sheet of transparent or translucent glass(1);
b) a first coating layer (2) having opaque regions arranged in an array or net which has been printed or otherwise applied to one side of said glass (1) with said first coating layer (2) leaving transparent coating-free crevice portions (6) between said opaque regions; and
c) a second, white coating layer (4) and a third, black or grey oil ink coating layer (5) with the same pattern as that of said first coating layer (2) which have been printed or otherwise applied over said first coating layer;
wherein said glass (1) on which coating layers (3), (4) and (5) are printed or otherwise is subject to a heat treatment of a temperature ranging from 600°C to 650°c when said coating layers dried.

2. A laminated ornamental glass according to claim 1, wherein the materials for forming said opaque regions, white paint and black or grey oil ink are composed of 15 to 70% by weight of ceramic color frit and 30 to 85% by weight of glass powder, in which the weight percentages are based on the total weight of the mixtures.

3. A laminated ornamental glass according to claim 2, wherein the content of the ceramic color frit is not more than 30% by weight and that of the glass powder is not less than 30% by weight.

4. A laminated ornamental glass according to any preceding claim, wherein said opaque regions are applied by screen printing.

5. A laminated ornamental glass according to any preceding claim, wherein each of said first, second and third coating layers has a thickness of between 0.04mm and 0.18mm.

6. A laminated ornamental glass according to claims 1 to 4, wherein the rate of transparency is in the range between 3% and 65%.

7. A laminated ornamental glass according to claims 1 to 4, wherein the opaque regions are composed of figures selected from circles, tetragons or hexagons.
